(19) Europäisches Patentamt

European Patent Office

Office européen des brevets

(11) Veröffentlichungsnummer: **0 503 325 A1**

# (12) EUROPÄISCHE PATENTANMELDUNG

(21) Anmeldenummer: **92102792.6**

(22) Anmeldetag: **20.02.92**

(51) Int. Cl.⁵: **B23K 9/12**, B23K 10/00, B23K 9/073

(30) Priorität: **14.03.91 DE 4108276**

(43) Veröffentlichungstag der Anmeldung:
**16.09.92 Patentblatt 92/38**

(84) Benannte Vertragsstaaten:
**DE FR GB IT**

(71) Anmelder: **MESSER GRIESHEIM GMBH**
**Hanauer Landstrasse 330**
**W-6000 Frankfurt/Main 1(DE)**

(72) Erfinder: **Halbauer, Klaus, Dr.**
**Kastanienweg 4**
**W-6072 Dreieich-Buchschlag(DE)**

(54) **Verfahren und Vorrichtung zur Konstanthaltung des Abstandes eines Schneidbrenners von einem zu bearbeitenden Werkstück.**

(57) Eine Qualitätsverminderung von Brennschnitten wird durch ein Verfahren und eine Vorrichtung zur Konstanthaltung des Abstandes eines Werkzeuges von einem zu bearbeitenden Werkstück, insbesondere zur Abstandskonstanthaltung eines Schneidbrenners einer Brennschneidmaschine von einem Werkstück, wobei die Abstandsänderungen zwischen dem Werkzeug und der Werkstückoberfläche von einem Sensor erfaßt und die Ausgangssignale des Sensors einer Werkzeughöhenverstellung zugeführt werden dadurch vermieden, daß erfindungsgemäß während der Bearbeitung die Abstandsänderung von einem ersten Sensor, vorzugsweise einem lichtbogenabhängigen Sensor, erfaßt werden und beim Auslösen bzw. Auftreten einer das abstandsporportionale Ausgangssignal des ersten Sensors beeinflussenden Größe das Ausgangssignal eines zweiten Sensors, vorzugsweise eines kapazitiven oder induktiven Sensors der Werkzeughöhenverstellung zugeführt wird.

EP 0 503 325 A1

Die Erfindung betrifft ein Verfahren und eine Vorrichtung zur Konstanthaltung des Abstandes eines Werkzeuges von einem zu bearbeitenden Werkstück gemäß dem Oberbegriff des Anspruches 1 bzw. 8.

Bei den meisten mit elektrischem Bogen, Gasflamme oder Laserstrahlen arbeitenden Bearbeitungsmaschinen ist die Kontrolle oder Steuerung des Abstandes zwischen dem Werkzeug und der zu bearbeitenden Oberfläche des Werkstückes entscheidend für das Resultat. So ist z. B. die Qualität einer mittels Brennschneidmaschine und Plasmabrenner hergestellten Schneidfuge von dem Abstand zwischen der Düse des Plasmabrenners und Werkstückoberfläche abhängig.

Hierzu ist es beispielsweise durch die von der Anmelderin unter der Bezeichnung LIBO-Regelung vertriebene Einrichtung bekannt, den Abstand mit einem licht-/plasmabogenabhängigen Sensor zu erfassen und entsprechende Regelsignal einer Plasmabrennerhöhenverstellung zuzuführen.

Beim Schneiden von Schnittkonturen (Formschneiden) wird dabei der Plasmabrenner mit unterschiedlichen Schneidgeschwindigkeiten über das Werkstück bewegt, wobei insbesondere vor Richtungsänderungen, z. B. Ecken, die Geschwindigkeit meist kontinuierlich reduziert und nach Umfahren der Ecke wieder kontinuierlich gesteigert wird. Die Praxis hat nun gezeigt, daß mit Änderungen der Schneidgeschwindigkeit sich auch das abstandsproportionale Ausgangssignal des lichtbogenabhängigen Sensors ändert, und zwar in der Weise, daß der Brenner in Richtung Werkstück bewegt wird und es zu Qualitätsverminderungen in der Schneidfuge kommt.

Bisher wurde deshalb mit dem Auslösen der Geschwindigkeitsreduzierung durch ein von einem Rechner erzeugten Signal die LIBO-Regelung abgeschaltet und nach Umfahren der Ecke durch ein weiteres Rechnersignal wieder eingeschaltet. Diese Betriebsweise ist insbesondere bei Bauteilen, die häufige Richtungswechsel und damit viele Geschwindigkeitsänderungen erfordern von Nachteil, da die Abstandsregelung entsprechend häufig ausgeschaltet ist. Insbesondere beim Plasmaschneiden mit einem sogenannten Feinstrahlplasmasystem, wie es beispielsweise von der Firma Komatsu unter der Bezeichnung G 940 vertrieben wird, führt das Abschalten zu einer starken Qualitätsverminderung der Schnitte, die nur dadurch behoben werden kann, daß die Schneidgeschwinigkeit über den gesamten Konturverlauf etwa konstant (niedrig) gehalten wird, so daß durch die Geschwindigkeit auch kleine Änderung der abstandsproportionalen Ausgangssignale des lichtbogenabhängigen Sensors mehr hervorgerufen werden. Die Folge hiervon ist jedoch eine unwirtschaftliche Betriebsweise, da gerade das Feinstrahlplasmasystem hohe Geschwindigkeiten bei guter Qualität ermöglicht.

Aufgabe der vorliegenden Erfindung ist es, diese Nachteile zu vermeiden und ein Verfahren sowie eine Vorrichtung hierfür zur Verfügung zu stellen, die auch bei einem Einsatz eines Plasmafeinstrahlsystemes eine max. Schnittgeschwindigkeit bei gleichbleibend hoher Schnittqualität ermöglicht.

Zur Lösung dieser Aufgabe wird ein Verfahren gemäß den kennzeichnenden Merkmalen des Anspruches 1 vorgeschlagen.

Weitere vorteilhafte Weiterbildungen des Verfahrens sind in den Ansprüchen 2 bis 7 angegeben.

Erfindungsgemäß ist nunmehr durch die während der Bearbeitung (z. B. Plasmafeinstrahlschneiden) erfolgende automatische Umschaltung (z. B. durch Signale, die der Rechner bei Geschwindigkeitsänderungen abgibt) von einem licht- bzw. plasmabogenabhängigen Abstandssensor auf einen zweiten kapazitiven oder induktiven (also nichtplasmabogenabhängigen) Sensor gewährleistet, daß auch während einer Schnittphase mit geänderter Schnittgeschwindigkeit die vorgewählte Abstandssollhöhe beibehalten bleibt und damit auch in diesem Bereich keine Qualitätsverminderungen eintreten. Nach Wegfall der Geschwindigkeitsänderung (Erreichen der ursprünglich eingestellten hohen Geschwindigkeit) wird durch ein weiteres Rechnersignal wieder auf den licht- bzw. plasmabogenabhängigen Sensor zurückgeschaltet. Somit wird entsprechend der Erfindung beim Auslösen/Auftreten von einer das abstandsproportionale Ausgangssignal des ersten (plasmabogenabhängigen) Sensors beeinflussenden Größe (Rechnersignal) das Ausgangssignal eines zweiten (kapazitiven) Sensors der Werkzeughöhenverstellung zugeführt.

Anstelle eines aus Geschwindigkeitswerten abgeleiteten Signales kann im Rechner auch ein Signal aus im Rechner gespeicherten Daten über Bauteilstellen, Schnittkonturen, Winkel zwischen einzelnen Schnittkonturelementen, Form und Lage von benachbarten Konturelementen, Materialien, Technologiedaten abgeleitet/erzeugt und zur Umschaltung der Sensoren benutzt werden.

In vorteilhafter Weiterbildung der Erfindung wird vorgeschlagen, daß beide Sensoren (lichtbogenabhängiger und kapazitiver oder induktiver) gleichzeitig oder abwechselnd die Abstandsänderungen erfassen.

Beim Auftreten einer das Ausgangssignal beeinflussenden Größe (z. B. das beim Schneiden von aus verschiedenen Materialien zusammengesetzten Werkstückplatte bei der Materialänderung plötzlich entstehende Ausgangssignal des lichtbogenabhängigen Sensors) wird dieses Ausgangssignal beispielsweise durch eine einfache Auswertlogik unterdrückt und somit nur noch das Ausgangssignal des nicht gestörten anderen Sensors, der Werkzeughöhenverstellung zugeführt. Hierbei steuert die Sensorordnung somit die Umschaltung selbst, ohne daß Signale aus einem Rechner erforderlich sind.

Eine besonders vorteilhafte Einrichtung nach der Erfindung ist im Anspruch 8 angegeben.

**Patentansprüche**

1. Verfahren zur Konstanthaltung des Abstandes eines Werkzeuges von einem zu bearbeitenden Werkstück, insbesondere zur Abstandskonstanthaltung eines Schneidbrenners einer Brennschneidmaschine von einem Werkstück, wobei die Abstandsänderungen zwischen dem Werkzeug und der Werkstückoberfläche von einem Sensor erfaßt und die Ausgangssignale des Sensors einer Werkzeughöhenverstellung zugeführt werden,
dadurch gekennzeichnet,
daß während der Bearbeitung die Abstandsänderungen von einem ersten Sensor, vorzugsweise einem lichtbogenabhängigen Sensor, erfaßt werden und beim Auslösen bzw. Auftreten einer das abstandsproportionale Ausgangssignal des ersten Sensor beeinflussenden Größe das Ausgangssignal eines zweiten Sensors, vorzugsweise eines kapazitiven oder induktiven Sensors, der Werkzeughöhenverstellung zugeführt wird.

2. Verfahren nach Anspruch 1,
dadurch gekennzeichnet,
daß automatisch an den Bauteilstellen, wo sich aufgrund der Lichtbogenphysik nicht abstandsproportionale Spannungsausgangssignale des lichtbogenabhängigen Sensors ergeben, auf eine Abstandsführung mit dem kapazitiven Sensor umgeschaltet wird.

3. Verfahren nach Anspruch 1 oder 2,
dadurch gekennzeichnet,
daß vom ersten auf den zweiten Sensor umgeschaltet wird, wobei die Umschaltung durch automatische Signale erfolgt, die vorzugsweise aus einer durch in einem Rechner abgespeicherten Schnittkontur abgeleitet werden.

4. Verfahren nach einem der Ansprüche 1 bis 3,
dadurch gekennzeichnet,
daß die automatische Umschaltung dann erfolgt, wenn der Winkel α zwischen zwei Schnittkonturelementen einen Grenzwinkel α max. überschreitet: α > α max. bzw. einen minimalen Grenzwinkel α min. unterschreitet α < α min.

5. Verfahren nach einem der Ansprüche 1 bis 4,
dadurch gekennzeichnet,
daß der exakte zeit- und/oder wegabhängige Umschaltpunkt vor dem gemeinsamen "Eckpunkt" der beiden auslösenden Schnittkonturelemente plasmaverfahrens- und/oder schneidgeschwindigkeits- und/oder konturwinkelabhängig ist und/oder von der Form der benachbarten Konturelemente bestimmt wird, wobei das entsprechende Umschaltsignal aus den entsprechenden, in einem Rechner abgespeicherten Daten abgeleitet/berechnet wird.

6. Verfahren nach einem der Ansprüche 1 bis 5,
dadurch gekennzeichnet,
daß nach dem Wegfall der das abstandsproportionale Ausgangssignal des ersten Sensors beeinflussenden Größe das Ausgangssignal des ersten Sensors wieder der Werkzeughöhenverstellung zugeführt wird.

7. Verfahren nach Anspruch 1,
dadurch gekennzeichnet
daß beide Sensoren gleichzeitig oder abwechselnd die Abstandsänderung erfassen und beim Auslösen bzw. Auftreten einer ein abstandsproportionales Ausgangssignal beeinflussenden Größe nur die Ausgangssignale des nicht gestörten Sensors der Werkzeughöhenverstellung zugeführt werden.

8. Einrichtung zur Konstanthaltung des Abstandes eines Werkzeuges von einem zu bearbeitenden Werkstück, insbesondere zur Abstandskonstanthaltung eines Schneidbrenners einer Brennschneidmaschine von einem Werkstück mit einem Sensorsystem, dessen Ausgangssignale einer Werkzeughöhenverstellung zuführbar sind,
dadurch gekennzeichnet,
daß das Sensorsystem einen ersten, vorzugsweise lichtbogenabhängigen Sensor und einen zweiten, vorzugsweise kapazitiven oder induktiven Sensor aufweist,
daß ferner beide Sensoren über eine Schaltlogik mit der Werkzeughöhenverstellung verbunden sind und daß weiterhn die Schaltlogik mit einem Rechner verbunden ist, der während der Bearbeitung in Abhängigkeit von gespeicherten Daten wie Schnittkontur, Schneid- und Werkstoffdaten Signale zum automatischen Umschalten von dem ersten auf den zweiten Sensor bzw. umgekehrt an die Schaltlogik abgibt.

Europäisches
Patentamt

# EUROPÄISCHER RECHERCHENBERICHT

Nummer der Anmeldung

EP    92 10 2792

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 190 100 (GET GESELLSCHAFT FÜR ELEKTRONIKTECHNOLOGIE) 6. August 1986 | 1,2,8 | B23K9/12 B23K10/00 |
| Y | * Seite 1, Zeile 21 - Seite 2, Zeile 36 * | 3-5 | |
| A | * Seite 3, Zeile 14 - Zeile 19 * | 6,7 | |
| | * Seite 4, Zeile 14 - Zeile 21 * | | |
| | * Seite 6, Zeile 12 - Zeile 19 * | | |
| | * Zusammenfassung; Ansprüche 1-5,15; Abbildungen 1,2 * | | |
| | --- | | |
| Y | FR-A-2 381 588 (CATERPILLAR TRACTOR CO.) 22. September 1978 | 3,4,5 | |
| A | * Seite 1, Zeile 1 - Seite 3, Zeile 2 * | 1,2,6-8 | |
| | * Seite 5, Zeile 22 - Zeile 32 * | | |
| | * Anspruch 1; Abbildung 1 * | | |
| | ----- | | |
| | | | RECHERCHIERTE SACHGEBIETE (Int. Cl.5) |
| | | | B23K |

Der vorliegende Recherchenbericht wurde für alle Patentansprüche erstellt

| Recherchenort | Abschlußdatum der Recherche | Prüfer |
|---|---|---|
| DEN HAAG | 23 JUNI 1992 | HAEGEMAN M. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
-------------------------------------------------------
& : Mitglied der gleichen Patentfamilie, übereinstimmendes
Dokument

EPO FORM 1503 03.82 (P0400)